# EUROPÄISCHE PATENTSCHRIFT

(11) **EP 0 663 068 B1**
(45) Veröffentlichungstag und Bekanntmachung des Hinweises auf die Patenterteilung: **02.04.1997**
(21) Anmeldenummer: 93918964.3
(22) Anmeldetag: 09.09.1993
(51) Int. Cl.: G01N 3/46

(54) **VERFAHREN ZUR BESTIMMUNG DER VERFORMBARKEIT DER OBERFLÄCHE EINES PRÜFKÖRPERS**
METHOD OF DETERMINING THE DEFORMABILITY OF THE SURFACE OF A TEST SPECIMEN
PROCEDE VISANT A DETERMINER LA DEFORMABILITE DE LA SURFACE D'UN ECHANTILLON

(30) Priorität: 01.10.1992 DE 4232982
(43) Veröffentlichungstag der Anmeldung: 19.07.1995
(73) Patentinhaber: Weinhold, Wolfgang P., D-97084 Würzburg (DE)
(72) Erfinder: WEINHOLD, P., Wolfgang, D-97084 Würzburg (DE); GABRIEL, Elmar, D-97209 Veitschöchheim (DE)
(74) Vertreter: Pöhner, Wilfried Anton, Dr.
(86) Internationale Anmeldenummer: DE9300827
(87) Internationale Veröffentlichungsnummer: WO9408219

(56) Entgegenhaltungen:
- DE-A- 4 004 344
- PATENT ABSTRACTS OF JAPAN vol. 9, no. 236 (P-390)(1959) 21. September 1985 & JP,A,60 091 237 (HITACHI SEISAKUSHO) 22. Mai 1985
- MESURES Bd. 57, Nr. 646 , Juni 1992 , PARIS, FR Seiten 66 - 67 J.-P. PIANTINO: 'La durete accede au temps reel'

## Beschreibung

Die Erfindung bezieht sich auf ein Verfahren zur Bestimmung der Verformbarkeit der Oberfläche eines Prüfkörpers, bei dem zunächst ein Höhenprofil einer Spur mit einem möglichst gering belasteten Taster vermessen wird, dieselbe Spur anschließend mit einem in den Prüfkörper eindringenden, belasteten Körper abgefahren wird, und schließlich der gering belastete Taster entlang der Spur fährt und ein Höhenprofil aufnimmt.

Zur Bestimmung der Härte und anderer mechanischer Eigenschaften, wie z.B. der Elastizitätsmoduln, insbesondere der oberflächennahen Bereiche eines Prüfkörpers sind verschiedene Verfahren bekannt.

In der DE-GM 71 40 841 ist ein Verfahren gattungsgemäßer Art beschrieben: Die Oberfläche des untersuchten Prüfkörpers wird anfangs mit einem gering belasteten Taster abgefahren und ein Höhenprofil aufgezeichnet. Nachdem ein kraftbeaufschlagter Eindringkörper über dieselbe Bahn bewegt wurde, nimmt der Taster schließlich wiederum ein Höhenprofil auf. Neben möglichen Meßfehlern, die durch unterschiedliche Abmessungen des Tasters und des Eindringkörpers bedingt sind, weshalb das vom Taster aufgezeichnete Höhenprofil nicht notwendigerweise mit der Bahn des Eindringkörpers übereinstimmt, ist als nachteilig anzusehen, daß anhand der Meßkurven nur eine Bestimmung der plastischen, d.h. irreversiblen Verformungen des Prüfkörpers möglich ist.

In der DE-OS 39 26 676 ist vorgeschlagen, die Eindringtiefe eines Tasters in einen Probekörper als Funktion der Normalkraft zu messen und zur Härteprüfung heranzuziehen. Dabei kann der Taster auch über die Oberfläche des Probekörpers geführt werden und in ritzender Weise eindringen. Da nur die Position des belasteten Tasters gemessen wird, ermöglicht dieses Verfahren nur die Summe aus den elastischen und den plastischen Verformungen zu erfassen.

Bei den bekannten Verfahren zur Bestimmung der mechanischen Eigenschaften der Oberfläche eines Prüfkörpers ist somit als nachteilig anzusehen, daß entweder nur die plastischen Verformungen oder aber die Summe aus den elastischen und plastischen Deformationen erfaßt werden kann. Ein Verfahren zur Messung der elastischen Verformungen ist nicht bekannt. Weiterhin besteht keine Möglichkeit, Aufschlüsse über die am Verformungsvorgang beteiligten Energieformen und -beträge, wie beispielsweise Reibungs- und Wärmeenergie zu gewinnen.

Ausgehend vom Stande der Technik liegt der Erfindung das Problem zugrunde, ein Verfahren zur Bestimmung der Verformbarkeit der Oberfläche eines Meßgegenstandes zu schaffen, das eine eingehende Untersuchung der elastischen und plastischen Deformationen sowie der daran beteiligten physikalischen Prozesse und Energieformen erlaubt.

Erfindungsgemäß wird das Problem dadurch gelöst, daß der Taster der in den Prüfkörper eindringende Körper ist, auch das Höhenprofil der Spur des belasteten Tasters registriert wird und zum einen die Differenz aus dem zuletzt und dem zuerst vermessenen Höhenprofil und zum anderen die Differenz aus dem zuletzt und dem unter Belastung aufgenommenen Höhenprofil zur Anzeige gebracht werden.

Der Kerngedanke besteht darin, zunächst mit einem Taster ein Höhenprofil auf der Oberfläche des Meßgegenstandes aufzunehmen, dasselbe Profil anschließend mit dem nunmehr belasteten Taster abzufahren und schließlich ein Höhenprofil mit dem wiederum gering belasteten Taster zu erfassen, um anschließend durch Differenzbildung der erfaßten Profile zum einen die irreversiblen und zum anderen die reversiblen Deformationen zur Anzeige zu bringen. Im einzelnen entsprechen die plastischen Verformungen der Differenz aus den ohne Belastung vor und nach dem Ritzvorgang aufgenommenen Höhenprofilen, während die Differenz aus dem zuletzt und dem unter Belastung vermessenen Höhenprofil den elastischen Deformationen gleichzusetzen ist. Um möglichst exakte Meßergebnisse zu erhalten, sollte die Belastung des Tasters während der Aufnahme des ersten und letzten Höhenprofils hinreichend gering gehalten werden, so daß keine Verformungen des Prüfkörpers und somit keine Verfälschungen der Meßwerte zu befürchten sind. Da der Taster auch zum Erzeugen der Ritzspur verwendet wird, ist gewährleistet, daß die anschließend - ohne Belastung - aufgenommene Spur mit der Ritzspur übereinstimmt. Wäre der Taster hingegen breiter als der Eindringkörper, würde er nicht den Boden der erzeugten Spur erfassen; wäre er jedoch schmaler, würde er einem nicht reproduzierbaren Weg folgen, da eine seitliche Führung fehlt.

Die Vorteile der Erfindung bestehen vornehmlich darin, daß sowohl die reversiblen als auch die irreversiblen Verformungen des Prüfgegenstandes entlang derselben Bahn ortsauflösend erfaßt werden. Das Verfahren eignet sich insbesondere für Materialien mit räumlich variierender Zusammensetzung und somit lokal unterschiedlichen Härten, wie beispielsweise Verbundwerkstoffe oder beschichtete Bauelemente.

Falls der zu untersuchende Prüfkörper entlang der vom Taster abgefahrenen Spur stark variierende Härten beinhaltet, erweist sich die Wahl der Belastung und der Geschwindigkeit des Tasters als problematisch. Sind beide konstant, wird die Eindringtiefe in besonders harten bzw. weichen Bereichen derart gering oder groß, daß keine definierte Aussage über die Verformbarkeit des Prüfkörpers möglich ist. Daher ist vorgeschlagen, die Belastung des Tasters während des Eindringens in den Prüfkörper zu variieren. Da die Eindringtiefe bei konstanter Belastung und hoher Geschwindigkeit geringer als bei einem langsam über den Prüfkörper geführten, belasteten Taster ist, besteht alternativ oder zusätzlich die Möglichkeit, seine Geschwindigkeit zu verändern. Im speziellen kann die Geschwindigkeit und/oder die Belastungskraft derart geregelt werden, daß sich eine konstante Eindringtiefe ergibt.

Neben den entstehenden Verformungen ist auch die dafür aufzuwendende mechanische Energie von Interesse. Anhand der lokalen Energieumwandlungen während des Verformungsvorganges können Rückschlüsse über die Bruchfestigkeit und das Wärmetransportverhalten des Prüfkörpers getroffen werden. Daher bietet sich eine Messung und Aufzeichnung der für das Bewegen des belasteten Tasters entlang der Bahn gegenüber dem Meßgegenstand notwendigen Kraft und/oder Leistung an. Ein weiterer Vorzug besteht darin, daß die Reibungskonstante µ anhand der Normal- und Tangentialkraft bestimmbar wird. Die für das Bewegen des Tasters aufzuwendende Leistung kann unschwer anhand der elektrischen Leistungsaufnahme seiner Antriebseinheit ermittelt werden, während die Kraft beispielsweise anhand der Geschwindigkeit des Tasters und der aufzuwendenden Leistung berechnet wird.

Weiterhin ist empfehlenswert, die Normalkraft des Tasters analog zu bekannten Härteprüfungsverfahren als Funktion der Eindringtiefe zu messen und zu registrieren. Die Daten ermöglichen, die Härte des Prüfkörpers in der zu seiner Oberfläche orthogonalen Richtung ortsauflösend zu analysieren und beispielsweise Unterschiede zwischen oberflächennahen und -fernen Bereichen zu untersuchen.

Als Regelgröße für die Geschwindigkeit und/oder Belastung des Tasters sind neben der Eindringtiefe, d.h. der Höhendifferenz zwischen der anfänglich und der unter Belastung vermessenen Spur die für die Relativbewegung aufzuwendende Kraft und/oder Leistung zweckmäßig. Die Regelung erfolgt beispielsweise derart, daß die Eindringtiefe oder die Kraft bzw. Leistung konstant gehalten werden.

Andererseits besteht jedoch die Möglichkeit, die Belastung und/oder Geschwindigkeit des Tasters periodisch vorzugsweise zwischen Null und einem Maximum zu variieren. Im speziellen erfolgt die Belastung mit einer statischen bzw. langsam variierten Vorkraft und einer überlagerten, periodisch wirkenden, kleineren Wechselkraft. Anhand der Abhängigkeit der Eindringtiefe von der Normalkraft können weitergehende Aussagen über die lokalen Materialstrukturen, wie beispielsweise die Elastizitätskonstanten (Youngscher Modul usw.) gewonnen werden.

Als Nachteil bekannter Verfahren zur Härtebestimmung ist anzusehen, daß sie keinen Rückschluß auf das lokale viskoelastische Fließverhalten erlauben. Insbesondere bei Verbundwerkstoffen wäre eine Information über derartige Materialeigenschaften wünschenswert, da häufig erhebliche Unterschiede der Viskoelastizität zwischen der Matrix und dem Füllstoff nachweisbar sind. Daher ist bevorzugt, daß die Eindringspur, nachdem sie mit dem belasteten Taster abgefahren wurde, mehrfach vermessen wird. Anhand der Zeitabhängigkeit der geometrischen Veränderungen, insbesondere des Höhenprofils kann das viskoelastische Verhalten eingehend untersucht werden. Durch mehrmaliges Abtasten ohne Belastung erfaßt man in Abhängigkeit von der Zeit die Rückbildung des elastischen Anteils. Die Festlegung, wann die Rückbildung zum Abschluß gelangt ist, wird auf diesem Wege möglich.

Um Aufschlüsse über die chemische Zusammensetzung und die Eigenschaften der oberflächenferneren Bereiche des Prüfkörpers zu gewinnen, ist vorgeschlagen, die Belastung und die Form des Tasters derart zu wählen, daß über die Verformung hinausgehend ein Materialabtrag erfolgt, dessen Menge und chemische Zusammensetzung ortsauflösend und/oder integrierend gemessen und registriert werden. Selbstverständlich besteht die Möglichkeit, das mit einem Materialabtrag verbundene Abfahren der Spur mehrmals zu wiederholen, um die Materialeigenschaften als Funktion der Eindringtiefe zu untersuchen. Die Analyse der Menge und der chemischen Zusammensetzung der abgetragenen Materialien kann nach bekannten, hier nicht näher erläuterten Verfahren erfolgen.

Da auch die lokale Abriebfestigkeit des Prüfkörpers von Interesse ist, ist empfohlen, den Verformungsvorgang mit gleichen oder variierten Bedingungen solange zu wiederholen, bis keine Veränderung der Eindringtiefe oder der Materialeigenschaften mehr nachweisbar sind. Die Anzahl der mit Belastung durchzuführenden Verfahrzyklen dient als Maß für die lokale Abriebs- und Kratzfestigkeit des Prüfkörpers.

Beispielsweise in technischen Anwendungen, wie z.B. Lagerungen ist eine aus Fett oder Öl bestehende Schicht zwischen zwei aneinander reibenden Körpern angeordnet. Es erweist sich daher als zweckmäßig, Festkörperteilchen oder ein Fluid oder eine Festkörpersuspension in einem Fluid zwischen den belasteten Taster und den Meßgegenstand einzubringen, um die gemessenen Härte- oder Reibungswerte direkt auf konkrete Anwendungszwecke übertragen zu können.

Außer dem durch den belasteten Taster erfaßten Höhenprofil kann seine unmittelbare Umgebung während des Verformungsvorganges optisch beobachtet und gespeichert werden, so daß auch die Deformationen der Materialbereiche seitlich des Tasters sowie die Seitenwände der Ritzspur weiteren Untersuchungen zugänglich sind.

Wird der verformte Bereich aus mindestens zwei Positionen gleichzeitig optisch beobachtet, kann aus den registrierten Bildern eine dreidimensionale Rekonstruktion des Verformungsvorganges erfolgen. So wird es beispielsweise möglich, die lokalen Materialverschiebungen ortsabhängig zu analysieren.

Die den Verformungsprozeß begleitenden physikalischen Vorgänge werden vorteilhafterweise erfaßt und registriert. Hierzu zählen beispielsweise die im sichtbaren Wellenlängenbereich emittierte Tribolumineszenz, welche durch eine Videokamera odgl. aufgenommen werden kann.

Auch die Erwärmung des Prüfkörpers und/oder des Tasters kann ortsauflösend erfaßt werden, um den Anteil der in Wärme umgesetzten mechanischen Energie zu ermitteln. Hierzu dienen im speziellen die Infra- und/oder Ultrarotemission erfassende Sensoren. Die Temperatur kann jedoch auch durch geeignete, hinreichend kleine Wärmesensoren, wie Thermoelemente odgl. direkt auf der Oberfläche des Prüfkörpers gemessen werden.

Die während des Verformungsvorganges erfaßten und registrierten Schall- und Vibrationserscheinungen können in Verbindung mit den übrigen Meßwerten Aufschlüsse über lokale Materialeigenschaften und Reaktionen auf den belasteten Taster aufzeigen.

Da der Verformungsprozeß die Emission sogenannter Exo-Elektronen bedingt, ist weiterhin vorgeschlagen, zu ihrer Detektion geeignete Sensoren nahe der Oberfläche des Prüfgegenstandes anzubringen und letzteren - wegen der geringen freien Weglänge der Elektronen in Luft - in einem evakuierten Gefäß anzuordnen.

Außer im Vakuum kann der Verformungs- und Meßvorgang zwecks Verbesserung der Reproduzierbarkeit und des Ausschlusses unbekannter, die Meßwerte verfälschender Umgebungseinflüsse unter reduziertem Luftdruck oder unter einer Gas- oder Dampfatmosphäre durchgeführt werden. Auch eine konstant gehaltene Temperatur ist zur Steigerung der Reproduzierbarkeit der Meßwerte geeignet.

Um die Meßzeit auf das notwendige Maß zu reduzieren, ist empfehlenswert, die anhand der ersten erfaßten Meßspur bestimmte Oberflächenrauhigkeit als Regelgröße für die Geschwindigkeit und/oder Belastung des Tasters zu verwenden. Der Vorzug besteht darin, daß homogene, nicht lokal variierende Oberflächenbereiche relativ schnell abgefahren werden können, so daß die Meßzeit entscheidend verkürzt ist.

Schließlich ist bevorzugt, einen Rechner zur Steuerung des Tasters, d.h. seiner Bahn, Geschwindigkeit und Belastung sowie zum Erfassen der Meßwerte zu verwenden.

Weitere Einzelheiten, Merkmale und Vorteile der Erfindung lassen sich dem nachfolgenden Beschreibungsteil entnehmen, in dem anhand der Zeichnungen eine Ausführungsform der Erfindung näher erläutert wird. Sie zeigen in schematischer Darstellung in
- Figur 1: einen Prüfkörper während der Aufnahme des ersten Höhenprofils
- Figur 2: einen Prüfkörper mit einem belasteten Taster
- Figur 3: einen Prüfkörper während der Aufnahme des dritten Höhenprofils
- Figur 4: die plastische Verformbarkeit
- Figur 5: die elastische sowie die Gesamtverformbarkeit

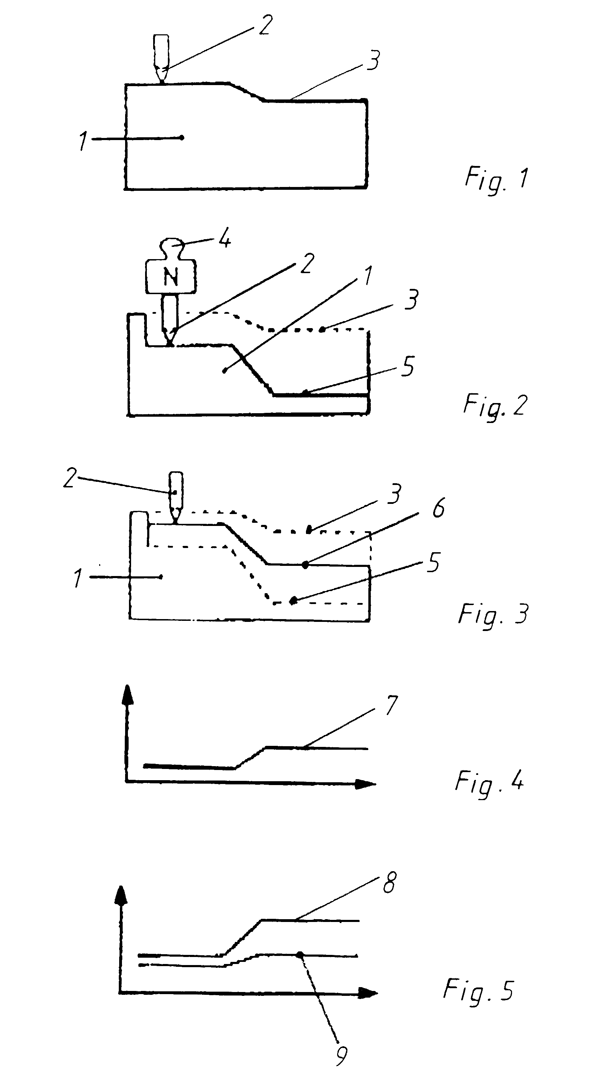

In Figur 1 ist der eine Spur (3) auf dem Prüfkörper (1) abfahrende, gering belastete Taster (2) dargestellt. Die Oberfläche des Prüfkörpers (1) weist etwa in der Mitte eine Stufe auf. Der Taster (2) wird von links nach rechts bewegt.

In Figur 2 ist der mit einem Gewicht (4) belastete Taster (2) bei der Aufnahme eines zweiten Höhenprofils (5) dargestellt. Aufgrund der Belastung des in den Prüfkörper (1) eindringenden Tasters (2) ist das Höhenprofil (5) insbesondere im Bereich rechts der Stufe bedeutend niedriger als das ursprüngliche (3).

In Figur 3 wird der Prüfkörper (1) zum drittenmal, nunmehr wiederum mit einem gering belasteten Taster (2) abgefahren. Das erfaßte Höhenprofil (6) ist - bedingt durch die irreversiblen Verformungen - niedriger als das ursprüngliche (3), jedoch - da sich die Oberfläche des Prüfgegenstandes (1) aufgrund des reversiblen Anteils der Verformungen wieder gehoben hat - höher als das unter Belastung vermessene (5).

In Figur 4 ist die Differenz (7) aus dem zuletzt (6) und dem anfangs gemessenen Höhenprofil (3) dargestellt; es entspricht der plastischen, also der irreversiblen Verformbarkeit.

In Figur 5 ist zum einen die Differenz (8) aus dem unter Belastung vermessenen (5) und dem ursprünglichen Höhenprofil (3) dargestellt; sie entspricht der Gesamtverformbarkeit, also der Summe aus plastischen und elastischen Verformungen. Zum anderen ist die Differenz (9) aus dem zuletzt (6) und dem unter Belastung aufgenommenen Höhenprofil (5) wiedergegeben; sie entspricht den elastischen Verformungen.

In Figur 4 und 5 ist gut erkennbar, daß der rechts der Stufe liegende Oberflächenbereich des Prüfkörpers (1) wesentlich weicher als der links der Stufe liegende ist, die Verformungen sind rechts ausgeprägt.

Im Ergebnis erhält man ein Verfahren, das eine wesentlich intensivere Untersuchung der Verformbarkeit eines Prüfkörpers und der einen Eindringvorgang begleitenden physikalischen Prozesse ermöglicht.

## Patentansprüche

1. Verfahren zur Bestimmung der Verformbarkeit der Oberfläche eines Prüfkörpers (1), bei dem zunächst ein Höhenprofil (3) einer Spur mit einem möglichst gering belasteten Taster (2) vermessen wird, dieselbe Spur anschließend mit einem in den Prüfkörper (1) eindringenden, belasteten Körper abgefahren wird, und schließlich der gering belastete Taster (2) entlang der Spur fährt und ein Höhenprofil (6) aufnimmt, wobei der Taster (2) der in den Prüfkörper (1) eindringende Körper ist,
wobei auch das Höhenprofil (5) der Spur des belasteten Tasters (2) registriert wird und
wobei zum einen die Differenz (7) aus dem zuletzt (6) und dem zuerst vermessenen Höhenprofil (3) und zum anderen die Differenz (9) aus dem zuletzt (6) und dem unter Belastung aufgenommenen Höhenprofil (5) zur Anzeige gebracht werden.

2. Verfahren nach Anspruch 1, **dadurch gekennzeichnet,** daß die Geschwindigkeit und/oder die Belastung des Tasters (2) während des Eindringens in den Prüfkörper (1) variiert wird.

3. Verfahren nach Anspruch 1 oder 2, **dadurch gekennzeichnet,** daß die für das Bewegen des belasteten Tasters (2) entlang der Bahn gegenüber dem Prüfkörper (1) notwendige Kraft und/oder Leistung gemessen und registriert wird.

4. Verfahren nach einem der Ansprüche 1 bis 3, **dadurch gekennzeichnet,** daß die Normalkraft des Tasters (2) als Funktion der Eindringtiefe gemessen und gespeichert wird.

5. Verfahren nach einem der Ansprüche 1 bis 4, **dadurch gekennzeichnet**, daß die Eindringtiefe des Tasters (2) als Regelgröße für seine Geschwindigkeit und Belastung verwendet wird.

6. Verfahren nach einem der Ansprüche 1 bis 5, **dadurch gekennzeichnet**, daß die für das Bewegen des belasteten Tasters (2) entlang der Bahn gegenüber dem Prüfkörper (1) aufzuwendende Kraft und/oder Leistung als Regelgröße für die Kraft und/oder Geschwindigkeit des Tasters (2) verwendet wird.

7. Verfahren nach einem der Ansprüche 1 bis 6, **dadurch gekennzeichnet,** daß die Belastung und/oder die Geschwindigkeit des Tasters (2) entlang seiner Bahn periodisch vorzugsweise zwischen Null und einem Maximum variiert wird.

8. Verfahren nach Anspruch 7, **dadurch gekennzeichnet,** daß die Belastung des Tasters (2) mit einer kontinuierlich wirkenden, statischen bzw. langsam variierten Vorkraft und einer überlagerten, periodisch wirkenden, kleineren Wechselkraft erfolgt.

9. Verfahren nach einem der Ansprüche 1 bis 8, **dadurch gekennzeichnet,** daß die Eindringspur (5) nach erfolgter Belastung des Prüfkörpers (1) mehrfach vermessen wird.

10. Verfahren nach einem der Ansprüche 1 bis 9, **dadurch gekennzeichnet**, daß die Belastung und der Taster (2) derart gewählt werden, daß über die Verformung hinausgehend ein Materialabtrag erfolgt, dessen Menge und chemische Zusammensetzung ortsauflösend und/oder integrierend gemessen und registriert werden.

11. Verfahren nach einem der Ansprüche 1 bis 10, **dadurch gekennzeichnet,** daß die Oberflächenverformung mit gleichen oder veränderten Bedingungen wiederholt wird, bis keine Veränderung der Eindringtiefe oder der Materialeigenschaften mehr nachweisbar ist.

12. Verfahren nach einem der Ansprüche 1 bis 11, **gekennzeichnet durc**h eine Schicht aus Festkörperteilchen oder einem Fluid oder einer Festkörpersuspension in einem Fluid zwischen dem belasteten Taster (2) und dem Prüfkörper (1).

13. Verfahren nach einem der Ansprüche 1 bis 12, **dadurch gekennzeichnet**, daß die unmittelbare Umgebung des Tasters (2) während des Verformungsvorganges optisch beobachtet und gespeichert wird.

14. Verfahren nach Anspruch 13, **dadurch gekennzeichnet,** daß der verformte Bereich aus mindestens zwei Positionen gleichzeitig optisch beobachtet und registriert wird, und daß daraus eine dreidimensionale Rekonstruktion des Verformungsvorganges erfolgt.

15. Verfahren nach einem der Ansprüche 1 bis 14, **dadurch gekennzeichnet**, daß die bei der Verformung auftretenden lichtoptischen Erscheinungen, z.B. Tribolumineszenz, gemessen und registriert werden.

16. Verfahrn nach einem der Ansprüche 1 bis 15, **dadurch gekennzeichnet**, daß die Erwärmung des Prüfkörpers (1) und/oder des Tasters (2) ortsauflösend, vorzugsweise durch Messung und Registrierung der Wärme- und/oder Ultrarotstrahlung erfaßt werden.

17. Verfahren nach einem der Ansprüche 1 bis 16, **dadurch gekennzeichnet**, daß die Schall- und Vibrationserscheinungen während des Verformungsvorganges gemessen und registriert werden.

18. Verfahren nach einem der Ansprüche 1 bis 17, **dadurch gekennzeichnet**, daß Elektronenemissionen (Exo-Elektronen) detektiert und registriert werden.

19. Verfahren nach einem der Ansprüche 1 bis 18, **dadurch gekennzeichnet**, daß der Verformungsvorgang unter reduziertem Luftdruck oder im Vakuum oder unter einer Gas- oder Dampfatmosphäre und/oder bei konstanter Temperatur durchgeführt wird.

20. Verfahren nach einem der Ansprüche 1 bis 19, **dadurch gekennzeichnet,** daß die anhand der ersten Meßspur (3) bestimmte Oberflächenrauhigkeit als Regelgröße für die Geschwindigkeit des Tasters (2) und/oder seine Belastung verwendet wird.

21. Verfahren nach einem der Ansprüche 1 bis 20, **dadurch gekennzeichnet,** daß ein Rechner den Taster (2) steuert und die Meßwerte erfaßt.

## Claims

1. Procedure to determine the deformability of a test specimen's (1) surface. Firstly, by scanning along a line on a surface with a lightly loaded stylus (2), the surface texture (3) of the specimen is measured. The same path is then scanned using a loaded indenter which penetrates the test specimen (I). Finally, the path is scanned with a lightly loaded stylus (2) and the surface texture (6) is recorded. The procedure is characterised such that the stylus (2) is also the indenter that penetrates the test specimen (1). Secondly, that the surface texture (5) of the loaded stylus' (2) path is recorded. Thirdly, that both the difference (7), between the final (6) and initial (3) measured surface textures, and also the difference (9), between the final surface texture (6) and that recorded by the loaded stylus (5), are displayed.

2. The procedure according to claim 1 is characterised such that the stylus' (2) speed and/or load is varied during the test specimen's (1) penetration.

3. The procedure according to claim 1 or 2 is characterised such that the force and/or power necessary for translating the loaded stylus (2) along the path on the test specimen (1) is recorded.

4. The procedure according to one of the claims 1 to 3 is characterised such that the stylus' (2) normal force as a function of the indentation depth is measured and stored.

5. The procedure according to one of the claims 1 to 4 is characterised such that the stylus' indentation depth is utilised as a control variable for its speed and loading

6. The procedure according to one of the claims 1 to 5 is characterised such that the force and/or power expended in translating the loaded stylus (2) along the path on the test specimen (1) is utilised as a control variable for the stylus' (2) speed.

7. The procedure according to one of the claims 1 to 6 is characterised such that the stylus' (2) loading and/or speed along its path is varied periodically - mainly between zero and a maximum value.

8. The procedure according to the claim 7 is characterised such that the stylus (2) is loaded with either a continuously acting static or slowly varying pre-load with a small superimposed periodically acting oscillating load.

9. The procedure according to one of the claims 1 to 8 is characterised such that the scratch path (5), caused by the test specimen's loading, is surveyed several times.

10. The procedure according to one of the claims 1 to 9 is characterised such that the loading and stylus are so chosen that the deformation is exceeded and that material is removed whose amount and chemical composition is'measured and recorded point for point and/or integrated over the total amount.

11. The procedure according to one of the claims 1 to 10 is characterised such that the surface deformation under constant or varying conditions is repeated until the changes in the indentation depth or material properties are no longer evident.

12. The procedure according to one of the claims 1 to 11 is characterised by a layer of solid particles or a fluid or a suspension of solid particles in a fluid between the loaded stylus (2) and the test specimen(1).

13. The procedure according to one of the claims 1 to 12 is characterised such that the immediate environment of the stylus is optically observed and stored during the deformation process.

14. The procedure according to claim 13 is characterised such that the deformed zone is optically observed and recorded from a least two positions simultaneously so that a three dimensional reconstruction of the deformation process results.

15. The procedure according to one of the claims 1 to 14 is characterised such that the optical phenomena which occur during the deformation, e.g. triboluminescence, are measured and recorded.

16. The procedure according to one of the claims 1 to 15 is characterised such that the heating of the test specimen (1) and/or stylus (2) is detected point for point, preferably by measuring and recording the thermal and/or ultra-red radiation.

17. The procedure according to one of the claims 1 to 16 is characterised such that the acoustic and vibration phenomena are measured and recorded during the deformation process.

18. The procedure according to one of the claims 1 to 17 is characterised such that the emission of electrons (exo-electrons) is detected and recorded.

19. The procedure according to one of the claims 1 to 18 is characterised such that the deformation process is carried out under reduced air pressure, in a vacuum or in a gaseous or vaporous atmosphere and/or at constant temperature.

20. The procedure according to one of the claims 1 to 19 is characterised such that the surface roughness, determined from the initial scan, is utilised as a control variable for the stylus' speed and/or loading.

21. The procedure according to one of the claims 1 to 20 is characterised such that a computer both controls the stylus and records the measured values.

## Revendications

1. Procédé pour déterminer la déformabilité de la surface d'un échantillon (1). Premièrement, en deplaçant le long d'une ligne un palpeur-aiguille (2) légèrement chargé, le profil de surface (3) de l'échantillon (1) est mesurée. La même trace est utilisée avec un palpeur-aiguille (2) chargé qui pénètre dans l'echantillon. Finalement, on passe à nouveau sur la même trace avec le palpeur-aiguille (2) légèrement chargé, et le profil de la surface (6) est enregistré.
**Le procédé est caractérisé de telle façon**
que c'est aussi le palpeur-aiguille (2) qui pénètre dans l'échantillon (1),
que le profil de surface de la trace mesurée avec le palpeur-aiguille (2) chargé est enregistré aussi,
et qu'on calcule les deux différences (7, 9) entre les profils de surface final (6) et initial (3) et aussi entre les profils de surface final (6) et celui enregistré avec le palpeur-aiguille (2) chargé (5).

2. Procédé suivant la revendication 1, caractérisé de telle façon que la vitesse du palpeur-aiguille (2) avec ou sans charge varie pendant la pénétration dans l'échantillon (1).

3. Procédé suivant les revendications 1 ou 2, caractérisé de telle façon que la force et/ou puissance nécessaires pour translater le palpeur-aiguille (2) chargé sur la trace de l'échantillon (1) est enregistrée.

4. Procédé suivant une des revendications 1 à 3, caractérisé de telle façon que la force normale se mesure et s'enregistre en fonction de la profondeur de la pénétration du palpeur-aiguille (2).

5. Procédé suivant une des revendications 1 à 4, caractérisé de telle façon que la profondeur de la pénétration du palpeur-aiguille (2) s'utilise comme variable de réglage pour sa vitesse et sa charge.

6. Procédé suivant une des revendications 1 à 5, caractérisé de telle façon que la force et/ou la puissance nécessaires à la translation du palpeur-aiguille (2) chargé sur la trace de l'échantillon (1) est utilisée comme variable de réglage pour la vitesse du palpeur-aiguille (2).

7. Procédé suivant une des revendications 1 à 6, caractérisé de telle façon que la charge du palpeur-aiguille (2) et/ou sa vitesse varient périodiquement, de préférence entre zéro et la valeur maximale.

8. Procédé suivant la revendication 7, caractérisé de telle façon que le palpeur-aiguille (2) est chargé avec soit une charge statique, soit une pré-charge variant doucement, superposée par une petite charge alternante périodique.

9. Procédé suivant une des revendications 1 à 8, caractérisé de telle façon que la pénétration le long de la trace, causée par la charge, est mesurée plusieurs fois.

10. Procédé suivant une des revendications 1 à 9, caractérisé de telle façon que la charge et le palpeur-aiguille (2) sont choisis de manière à ce qu'il se produit, outre la déformation, l'enlèvement du matériau dont le montant et la composition chimique sont mesurés et entregistrés localement et/ou de manière intégrante.

11. Procédé suivant une des revendications 1 à 10, caractérisé de telle façon que la deformation de surface sous des conditions constantes ou variables est répétée jusqu' à ce qu'on ne puisse plus détecter des changements dans la profondeur ou dans les propriétés des matériaux.

12. Procédé suivant une des revendications 1 à 11, caractérisé de telle façon qu'il y a une pellicule de particules solides ou un fluide ou une suspension de particules solides dans un fluide entre le palpeur-aiguille (2) chargé et l'échantillon (1).

13. Procédé suivant une des revendications 1 à 12, caractérisé de telle façon que, pendant le processus de déformation, la périphérie immédiate du palpeur-aiguille (2) est observée optiquement et les résultats sont enregistrés.

14. Procédé suivant une des revendications 1 à 13, caractérisé de telle façon que la zone de déformation est observée optiquement et simultanément à partir de (au moins) deux positions différentes, et que s'effectue la reconstruction en trois dimensions des resultats du processus de déformation.

15. Procédé suivant une des revendications 1 à 14, caractérisé de telle façon que les phenomènes optiques qui apparaient pendant la déformation, par exemple triboluminescence, sont mesurés et enregistrés.

16. Procédé suivant une des revendications 1 à 15 caractérisé de telle façon que le chauffage de l'échantillon et/ou du palpeur-aiguille (2), est détecté localement, de préférence en mesurant et enregistrant la radiation thermique et/ou infrarouge.

17. Procédé suivant une des revendications 1 à 16 caractérisé de telle façon que les phenomènes vibratoires et acoustiques sont mesurés et enregistrés pendant le processus de déformation.

18. Procédé suivant une des revendications 1 à 17, caractérisé de telle façon que l'émission d'électrons (exoélectrons) est détectée et enregistrée.

19. Procédé suivant une des revendications 1 à 18, caractérisé de telle façon que le processus de déformation se déroule sous air comprimé, sous vide ou sous atmosphère de gaz et/ou à température constante.

20. Procédé suivant une des revendications 1 à 19, caractérisé de telle façon que la rugosité de surface, déterminée par le premier passage (3), est utilisée comme variable de réglage pour la vitesse et/ou la charge du palpeur-aiguille (2).

21. Procédé suivant une des revendications 1 à 20, caractérisé de telle façon qu'un ordinateur contrôle le palpeur-aiguille (2) et enregistre les valeurs.
